# EUROPEAN PATENT APPLICATION

(11) **EP 2 030 819 A1**
(43) Date of publication of application: **04.03.2009**
(21) Application number: 08162543.6
(22) Date of filing: 18.08.2008
(51) Int. Cl.: B60H 3/00

(54) **Automotive air conditioner with ionizer**

(30) Priority: 28.08.2007 JP 2007220922
(71) Applicant: Sanden Corporation, Isesaki-shi, Gunma 372-8502 (JP)
(72) Inventor: Imafuji, Tomohisa, Isesaki-shi Gunma 372-8502 (JP); Hokari, Masayuki, Isesaki-shi Gunma 372-8502 (JP); Murata, Hisae, Isesaki-shi Gunma 372-8502 (JP)
(74) Representative: Haley, Stephen

(57) **Abstract**

An automotive air conditioner has an ionizer (40). The automotive air conditioner supplies ions generated by the ionizer (40) into a passenger compartment (6) to create an average ion concentration of 5000 ions per cc of higher in the passenger compartment (6).

## Description

### BACKGROUND OF THE INVENTION

This invention relates to an automotive air conditioner with an ionizer.

Some automotive air conditioners have an HVAC unit placed inside an instrument panel at the front of a vehicle's passenger compartment. An airway along which conditioned air is sent into the passenger compartment is defined partly within a housing of the HVAC unit.

More specifically, within the housing of the HVAC unit, a blower and an evaporator are accommodated. The blower forms airflow from air inlets to air outlets of the HVAC unit, and the evaporator can cool the air passing through it. Within the HVAC unit housing, upstream of the blower, a filter formed of nonwoven fabric or the like is provided. The filter removes dust from airflow.

Air ducts extend from the respective air outlets. The air ducts have outlet vents open to the passenger compartment, such as a defrost air vent directed toward a windshield, face air vents each directed toward a passenger's upper body, and foot air vents each directed toward a passenger's feet.

Japanese Patent Application KOKAI Publication 2004-182123 discloses an automotive air conditioner with an ionizer designed to send air containing ions into the passenger compartment to relax passengers and eliminate bacteria and odor from the air in the passenger compartment. More specifically, in the automotive air conditioner with an ionizer disclosed in Japanese Patent Application KOKAI Publication 2004-182123, the ionizer is fitted to a midsection of an air duct connecting the HVAC unit and a side outlet vent (face air vent). Ions generated by the ionizer are emitted through the side outlet vent, thereby supplied to a driver.

In recent years, passengers' interest in passenger-compartment inside air cleanliness has been increasing, and the automotive air conditioner is required to remove not only coarse particles such as powder dust and dust, but also airborne particulates. Here, airborne particulates include soot in smoke of cigarettes and in exhaust gases from diesel vehicles, pollen Ubisch bodies separated from the surface of pollen grains, etc.

If airborne particulates in the passenger compartment is to be captured by a filter formed of conventional nonwoven fabric and incorporated in the automotive air conditioner, the nonwoven fabric needs to have a minute fiber diameter and an increased surface density. The minute fiber diameter and increased surface density of nonwoven fabric, however, leads to an increase in the filter's ventilation resistance.

There is a strong demand for reduction in weight and size of the HVAC unit of the automotive air conditioner, and an increase in the filter's ventilation resistance makes it difficult to obtain the quantity of the airflow required for air conditioning. Further, clogging of nonwoven fabric during use leads to an increase in the filter's ventilation resistance, which may worsen the air-conditioning performance of the automotive air conditioner.

It is to be noted that although it is known that ions have effects of relaxing a driver, bacteria elimination and odor elimination from the air in the passenger compartment, it is not known that ions can remove airborne particulates efficiently if certain requirements are met.

### SUMMARY OF THE INVENTION

The object of the present invention is to provide an automotive air conditioner with an ionizer, which supplies ions to the passenger compartment to remove airborne particulates efficiently, without entailing an increase in filter's ventilation resistance.

In order to achieve the above object, the present invention provides an automotive air conditioner with an ionizer for generating ions, configured to supply ions generated by the ionizer into a passenger compartment of a vehicle, characterized by creating an average ion concentration of 5000 ions per cc or higher in the passenger compartment.

In the automotive air conditioner with an ionizer according to the present invention, airborne particulates are efficiently removed from the air in the passenger compartment by creating an average ion concentration of 5000 ions per cc or higher in the passenger compartment. Thus, the filter for this automotive air conditioner does not need to be formed of nonwoven fabric high in surface density or minute in fiber diameter, so that an increase in filter's ventilation resistance is avoided.

In a preferred configuration, the ionizer is placed within a housing of an HVAC unit constituting the automotive air conditioner, near an air outlet of the housing.

In this preferred configuration, the arrangement of the ionizer near the air outlet of the housing of the HVAC unit allows simultaneous installation of the HVAC unit and the ionizer on the vehicle, which facilitates the installation of the automotive air conditioner on the vehicle.

In a preferred configuration, the automotive air conditioner further includes a filter placed within a housing of an HVAC unit constituting the automotive air conditioner, near an air inlet of the housing, where the filter comprises nonwoven fabric having a surface density between 10g/m² and 200g/m² and containing either polypropylene or polyethylene terephthalate, and the nonwoven fabric is pleated such that the ratio p/h of pitch p to pleat width h is between 0.1 and 0.5.

In this preferred configuration, since the filter is formed by a nonwoven fabric having a surface density between 10g/m² and 200g/m² and pleated in a specified manner, the filter captures airborne particulates efficiently, while keeping an increase in ventilation resistance at low levels.

### BRIEF DESCRIPTION OF THE DRAWINGS

The present invention will become more fully understood from the detailed description of an embodiment given hereinbelow and the accompanying drawings which are given by way of illustration only, and thus, are not limitative of the present invention, and wherein:
FIG. 1 schematically shows the configuration of an automotive air conditioner with an ionizer according to a first embodiment,
FIG. 2 is a diagram for showing locations within a passenger compartment at which ion concentration is measured,
FIG. 3 is a diagram for explaining how airborne particulates are adsorbed on fibers constituting electret nonwoven fabric,
FIG. 4 is a diagram for explaining the shape of a filter used in the automotive air conditioner with an ionizer shown in FIG. 1,
FIG. 5 is a graph showing relation between ion concentration and particulate residual ratio,
FIG. 6 is a diagram for explaining an experimental apparatus used for obtaining data on example A and comparative example A for which the graph of FIG. 5 is plotted,
FIG. 7 is a diagram for explaining an experimental apparatus used for obtaining data on example B and comparative example B for which the graph of FIG. 5 is plotted, and
FIG. 8 is a graph showing relation between particulate removal efficiency and filter's ventilation resistance for the automotive air conditioner with an ionizer shown in FIG. 1 and a conventional automotive air conditioner.

### DETAILED DESCRIPTION OF THE PREFERRED EMBODIMENT

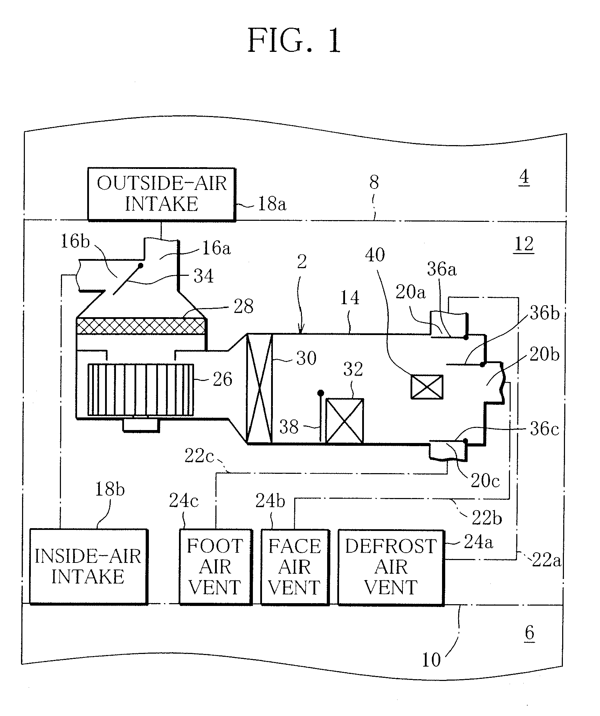

FIG. 1 schematically shows the configuration of an automotive air conditioner with an ionizer according to a first embodiment of the present invention. This automotive air conditioner includes an HVAC unit 2.

Specifically, a bulkhead 8 separates an engine room 4 and a passenger compartment 6 of a vehicle. In a front part of the passenger compartment 6, a mechanical room 12 is defined between the bulkhead 8 and an instrument panel 10. The HVAC unit 2 is installed in the mechanical room 12.

The HVAC unit 2 has a housing 14, and an airway along which conditioned air is sent to the passenger compartment 6 is defined partly within the housing 14.

More specifically, two air inlets 16a, 16b, one for drawing outside air and the other for circulating inside air, are provided at an end of the housing 14. An outside-air duct with an outside-air intake 18a open to the outside is connected to the outside-air inlet 16a, while an inside-air duct with an inside-air intake 18b open to the passenger compartment 6 is connected to the inside-air inlet 16b.

At the opposite end of the housing 14, three air outlets 20a, 20b, 20c are provided, and a defrost air duct 22a, a face air duct 22b and a foot air duct 22c are connected to the air outlets 20a, 20b, 20c, respectively. The defrost air duct 22a, face air duct 22b and foot air duct 22c have outlet vents at different locations within the passenger compartment 6. The outlet vent (defrost air vent) 24a of the defrost air duct 22a is directed toward a windshield. The face air duct 22b has, for example four outlet vents (face air vents) 24b each directed toward a passenger's upper body on the driver's seat side or the passenger seat side. The outlet vents 24c of the foot air duct 22c are each directed toward a passenger's feet.

It is noted that the "a", "b" and "c" at the end of the reference signs may be omitted hereinafter.

Within the housing 14, a blower 26 is provided on the air inlet 16 side. By being driven by a blower motor, the blower 26 rotates, thereby forming airflow from the air inlets 16 to the air outlets 20, within the housing 14.

Within the housing 14, a filter 28 is provided between the air inlets 16 and the blower 26. The area of the filter 28 is approximately equal to the cross-sectional area of the housing 14 at the location where the filter 28 is fitted. Consequently, the airflow formed by the blower 26 necessarily passes through the filter 28, during which dust in the air sticks to the filter 28, so that the air is purified. The filter 28 thus functions as a dust filter.

Within the housing 14, also an evaporator 30 is provided downstream of the blower 26 in the direction of airflow. The front of the evaporator 30 facing the blower 26 has an area approximately equal to the cross-sectional area of the housing 14 at the location where the evaporator 30 is fitted so that all the airflow passes through spaces in the evaporator 30 (heat-exchange part).

Although not shown in the drawing, the evaporator 30 is inserted in refrigerant circulation piping extending from the engine room 4 to the mechanical room 12. In the refrigerant circulation piping, also a compressor, a condenser, a receiver and an expansion valve are inserted. When power is transmitted from an engine to the compressor, the compressor causes the refrigerant to circulate within the refrigerant circulation piping, where the refrigerant evaporates in the evaporator. Since the refrigerant evaporates absorbing heat from the airflow passing through the spaces in the evaporator 30, the airflow is cooled.

Within the housing 14, also a heater core 32 is provided downstream of the evaporator 30 in the direction of airflow. The front of the heater core 32 facing the evaporator 30 has an area smaller than the cross-sectional area of the housing 14 at the location where the heater core 32 is fitted so that only part of the airflow having passed through the evaporator 30 passes through spaces in the heater core 32 (heat-exchange part).

Although not shown in the drawing, the heater core 32 is inserted in engine-cooling-water branch piping extending from the engine room 4 to the mechanical room 12, together with a hot-water valve. The branch piping is connected to engine-cooling-water circulation piping for circulating engine cooling water between the engine and a radiator, where the heater core 32 and the radiator are arranged in parallel. When the hot-water valve is opened while engine cooling water is circulating within the circulation piping, engine cooling water heated by the engine (hot water) flows into the branch piping and heats the heater core 32, and airflow passing through the spaces in the heated heater core 32 is heated.

Within the housing 14, a plurality of dampers (doors) are provided to change the airway, or path for the airflow created by the blower 26.

More specifically, near the air inlets 16, an inside-air/outside-air switch damper for opening and closing the air inlets 16 is provided. Near the air outlets 20, a defrost air control damper 36a, a face air control damper 36b, and a foot air control damper 36c are provided, respectively. Near the front of the heater core 32, a heater-core damper 38 is provided. The heater-core damper 38 regulates the quantity of the airflow passing through the heater core 32 by the degree of opening.

The automotive air conditioner further includes an ionizer 40.

The ionizer 40 is placed within the housing 41, near the air outlets 20. The ionizer 40 may be any type as long as it can generate ions, negative ions, in particular. For example, the ionizer 40 can be a corona discharge ionizer or an electron-emitting ionizer, where the electron-emitting ionizer may be a type using an iron-core transformer or a type using a piezoelectric transformer as a high-voltage generating means.

When supplied with power, the ionizer 40 can negatively charge molecules in the airflow passing through the ionizer 40, by corona discharge or electron emission. Thus, when power is supplied to the ionizer 40 while the blower 26 of the automotive air conditioner is operating, the airflow created by the blower 26 passes through the ionizer 40, so that ions are supplied into the passenger compartment 6.

The automotive air conditioner with the ionizer supplies ions into the passenger compartment 6 in order to remove airborne particulates from the air in the passenger compartment 6. Thus, it supplies ions to create an average ion concentration of 5000 ions per cc or higher in the passenger compartment 6. The airborne particulates include soot in smoke of cigarettes and in exhaust gases from diesel vehicles, pollen Ubisch bodies separated from the surface of pollen grains, etc., and are between 0.1 µm and 2.5 µm in size, for example.

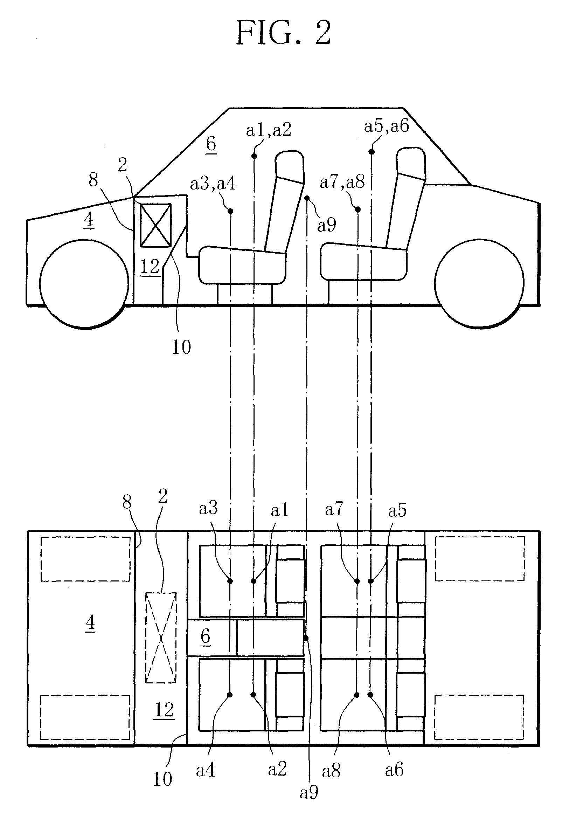

Here, the average ion concentration in the passenger compartment 6 means the arithmetical mean of ion concentrations measured at a plurality of locations within the passenger compartment 6. FIG. 2 shows nine locations a1 to a9 of measurement by way of example. Although there is no particular limitation concerning the number of locations of measurement, the locations of measurement should desirably be uniformly distributed in the entire passenger compartment 6.

In the above-described automotive air conditioner with the ionizer, airborne particulates are efficiently removed from the air in the passenger compartment by creating an average ion concentration of 5000 ions per cc or higher in the passenger compartment 6. Specifically, in the passenger compartment 6, ions combine with airborne particulates, and the resultant combined particulates are drawn into the housing 14 of the HVAC unit 2 through the inside-air intake 18b. The combined particulates drawn in are adsorbed and captured by the filter 28.

Thus, the filter 28 of this automotive air conditioner does not need to be formed of nonwoven fabric high in surface density or minute in fiber diameter, so that an increase in filter's ventilation resistance is avoided.

The present invention is not limited to the above-described embodiment but can be modified in various ways.

For example, although in the described embodiment, the ionizer 40 is placed within the housing 14 of the HVAC unit 2, the ionizer 40 can be placed at any location allowing the ionizer 40 to create an average ion concentration of 5000 ions per cc or higher in the passenger compartment 6. For example, the ionizer 40 may be placed in the passenger compartment 6.

Placing the ionizer 40 within the housing 14 of the HVAC unit 2, however, allows simultaneous installation of the HVAC unit 2 and the ionizer 40 on the vehicle, which facilitates the installation of the automotive air conditioner with the ionizer on the vehicle.

Further, placing the ionizer 40 near the air outlets 20 of the housing 14 leads to uniform distribution of ions generated by the ionizer 40 in the entire passenger compartment 6, through the air outlets 20a, 20b and 20c. Placing the ionizer 40 near the air outlets 20 of the housing 14 also prevents ions from being neutralized within the housing 14, thereby allowing efficient supply of generated ions into the passenger compartment 6.

Although in the described embodiment, the filter 28 which captures the combined particulates resulting from ions combining with airborne particulates constitutes the automotive air conditioner with the ionizer, the filter 28 is dispensable for the automotive air conditioner with the ionizer, while the ionizer 40 is indispensable.

Although in the described embodiment, a common dust filter is used as the filter 28, the filter 28 desirably comprises electret, or permanently-electrified nonwoven fabric in order to capture airborne particulates efficiently. The electret nonwoven fabric can be prepared using corona discharge, for example.

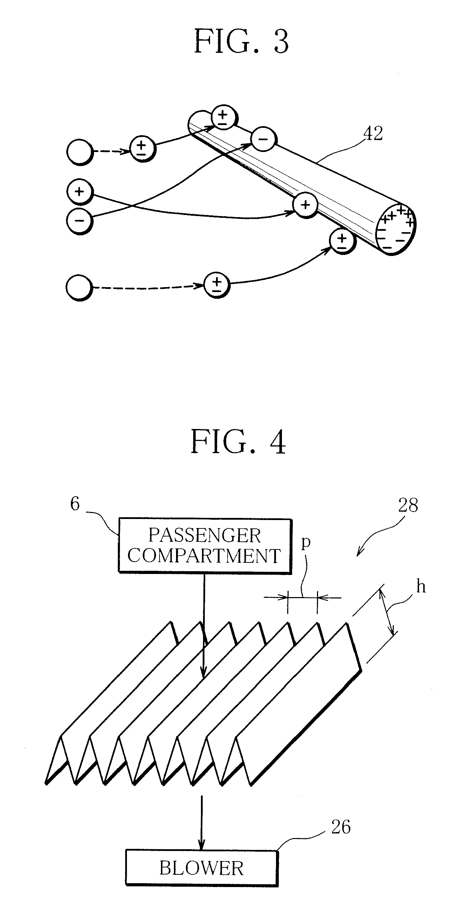

More specifically, as schematically shown in FIG. 3, fibers 42 constituting electret nonwoven fabric contain localized positive and negative charges. Thus, positively-or negatively-charged airborne particulates are electrostatically adsorbed on the fibers 42 and therefore captured by the filter 28 efficiently. The combined particulates resulting from ions combining with airborne particulates are electrically neutral but have an induced polarization, which allows the combined particulates to be adsorbed on the fibers 42 and therefore captured by the filter 28 efficiently.

The filter 28 is desirably made from polypropylene (PP) or polyethylene terephthalate (PET), or in other words, the filter 28 desirably comprises nonwoven fabric containing PP or PET.

In order to keep the filter 28's ventilation resistance at low levels, the surface density of nonwoven fabric constituting the filter 28 is desirably between 10g/m² and 200g/m².

Further, in order to efficiently remove airborne particulates while keeping the ventilation resistance at low levels, the filter 28 or the nonwoven fabric is desirably pleated in a specified manner. Specifically, as shown in FIG. 4, the ratio p/h of pitch p to pleat width h is desirably between 0.1 and 0.5.

### [Examples]

### 1. Examples A, B and comparative examples A, B

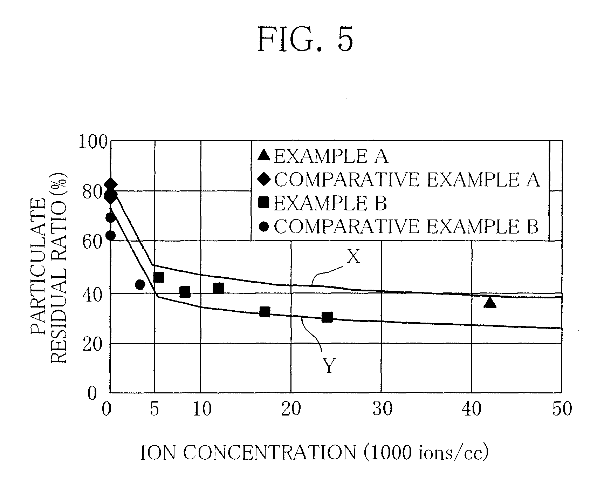

FIG. 5 is a graph showing relation between ion concentration and airborne-particulate removal efficiency.

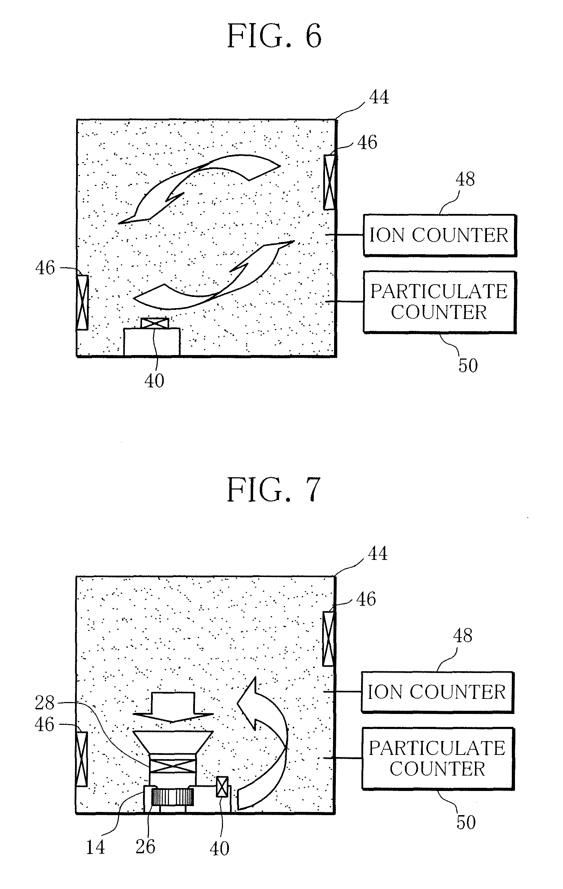

In respect of example A and comparative example A, measurement was performed using an experimental apparatus shown in FIG. 6. The experimental apparatus includes an acrylic chamber 44 of 1m³ in volume, and an ionizer 40 is placed within the chamber 44. The ionizer 40 can control the amount of ions generated, thereby controlling ion concentration within the chamber 44.

To the chamber 44, two fans 46 for moving air round within the chamber 44, an ion counter 48 (ITC-201A made by ANDES Electric Co., Ltd.) for counting the number of ions within the chamber 44, and a particulate counter 50 (KC-01A made by RION Co., Ltd.) for counting the number of airborne particulates within the chamber 44 are fitted.

Test temperature is between 20°C and 25°, the airflow created by the fans 46 is 75m³/h, and the particulate counter 50 counts airborne particulates of 0.3 µm or greater in size.

In example A and comparative example A, before the ionizer 40 was activated, the number of airborne particulates was counted while keeping the fans 46 operating. Then the ionizer 40 was activated to create a specified ion concentration, and 30 minutes after the activation, the number of airborne particulates was counted. The particulate residual ratio on the vertical axis in FIG. 7 is the ratio of the number of airborne particulates before activation of the ionizer 40 to the number of airborne articulates 30 minutes after activation of the ionizer 40.

Example B and comparative example B differ from example A and comparative example A in that a housing 14 of an HVAC unit 2 was placed in the chamber 44 and that a blower 26 was used to move air instead of the fans 46. Also the airflow created by the blower 26 is 75m³/h.

In FIG. 5, curve X is an approximated particulate residual ratio curve for example A and comparative example A, while curve Y is an approximated particulate residual ratio curve for example B and comparative example B. Curves X and Y show that below the in-chamber 44 ion concentration 5000 ions per cc, the particulate residual ratio sharply decreases with an increase in ion concentration. This indicates that airborne particulates are efficiently removed from the air in the passenger compartment 6 by creating an average ion concentration of 5000 ions per cc or higher in the passenger compartment 6. 2. Examples C1, C2 and comparative examples C1, C2, C3

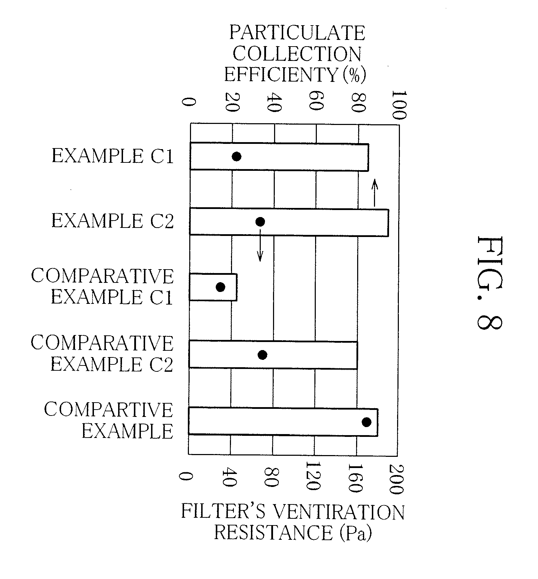

In FIG. 8, examples C1 and C2 show relation between filter 28's ventilation resistance and particulate removal efficiency (dust collection efficiency) for an automotive air conditioner with an ionizer according to the above-described embodiment, while comparative examples C1, C2 and C3 show relation between filter's ventilation resistance (pressure loss) and particulate removal efficiency for a conventional automotive air conditioner without an ionizer 40.

Comparative examples C1, C2 and C3 demonstrate that an attempt to increase the particulate removal efficiency only by a filter entails an increase in filter's ventilation resistance. Specifically, the filter 28 achieving the particulate removal efficiency of 90% or higher has airflow resistance of 170Pa.

On the other hand, examples C1 and C2 demonstrate that supplying ions to create an ion concentration of 5000 ions per cc ensures high airborne-particulate removal efficiency even with the filter 28 having low airflow resistance. Specifically, the filter having airflow resistance of less than 70Pa can ensure the particulate removal efficiency of 90% or higher.

## Claims

1. An automotive air conditioner with an ionizer (40) for generating ions, configured to supply ions generated by the ionizer (40) into a passenger compartment (6) of a vehicle, **characterized by**
creating an average ion concentration of 5000 ions per cc or higher in the passenger compartment (6).

2. The automotive air conditioner with the ionizer according to claim 1, **characterized in that**
the ionizer (40) is placed within a housing (14) of an HVAC unit constituting the automotive air conditioner, near an air outlet (20) of the housing (14).

3. The automotive air conditioner with the ionizer according to claim 1 or 2, **characterized in that**
the automotive air conditioner further includes a filter (28) placed within a housing (14) of an HVAC unit constituting the automotive air conditioner, near an air inlet (16) of the housing (14),
the filter (28) comprises nonwoven fabric,
the nonwoven fabric has a surface density between 10g/m² and 200g/m² and contains either polypropylene or polyethylene terephthalate, and
the nonwoven fabric is pleated such that the ratio p/h of pitch p to pleat width h is between 0.1 and 0.5.
